# EUROPÄISCHE PATENTSCHRIFT

(11) **EP 1 649 197 B1**
(45) Veröffentlichungstag und Bekanntmachung des Hinweises auf die Patenterteilung: **29.11.2006**
(21) Anmeldenummer: 04740905.7
(22) Anmeldetag: 10.07.2004
(51) Int. Cl.: F16H 57/08

(54) **PLANETENTRÄGER FÜR GETRIEBE**
PLANET CARRIER FOR A GEARBOX
PORTE-SATELLITES POUR BOITES DE VITESSES

(30) Priorität: 25.07.2003 DE 10333880
(43) Veröffentlichungstag der Anmeldung: 26.04.2006
(73) Patentinhaber: Schaeffler KG, 91074 Herzogenaurach (DE)
(72) Erfinder: RADINGER, Norbert, 90475 Nürnberg (DE); FICK, Matthias, 91220 Schnaittach (DE)
(86) Internationale Anmeldenummer: PCT/EP2004/007642
(87) Internationale Veröffentlichungsnummer: WO 2005/015057

(56) Entgegenhaltungen:
- DE-A- 19 544 197
- DE-C- 4 302 844
- US-A- 5 685 798
- PATENT ABSTRACTS OF JAPAN Bd. 2002, Nr. 02, 2. April 2002 (2002-04-02) & JP 2001 304350 A (KOYO SEIKO CO LTD), 31. Oktober 2001 (2001-10-31)
- PATENT ABSTRACTS OF JAPAN Bd. 2000, Nr. 24, 11. Mai 2001 (2001-05-11) & JP 2001 200897 A (OTICS CORP), 27. Juli 2001 (2001-07-27)
- PATENT ABSTRACTS OF JAPAN Bd. 2002, Nr. 05, 3. Mai 2002 (2002-05-03) & JP 2002 021946 A (AIDA ENG LTD), 23. Januar 2002 (2002-01-23)

## Beschreibung

### Gebiet der Erfindung

Die Erfindung betrifft einen Planetenträger für Getriebe, insbesondere Automatik- oder Lastschaltgetriebe, in dem Planetenräder auf Bolzen gelagert sind die mit einem koaxial zur Mittelachse des Planetenträgers angeordneten Sonnenrad und einem Hohlrad im Eingriff stehen. Weiterhin ist der Planetenträger mit einem Lamellenkörper für Kupplungs- oder Bremslamellen versehen.

### Hintergrund der Erfindung

Planetengetriebe der genannten Art sind vor allem in Automatik- oder Lastschaltgetrieben in Verwendung. Sie bestehen aus einem zentralen Sonnenrad, einem konzentrisch dazu angeordneten Hohlrad und mehreren Planetenrädern, die zwischen dem Sonnen und dem Hohlrad angeordnet sind. Die Drehachsen der Planetenräder sind parallel, aber mit Achsabstand, zu denen des Sonnen- und Hohlrades ausgerichtet, wobei die Verzahnung der Planetenräder in ständigem Eingriff mit der Verzahnung des Sonnen- bzw. des Hohlrades steht. Die Planetenräder sind auf einem Planetenträger drehbar gelagert. Planetenträger, Sonnen- und Hohlrad sind zur Veränderung des Übersetzungsverhältnisses miteinander bzw. mit einem feststehenden Getriebebauteil kuppelbar, wodurch die aneinander gekuppelten Bauteile auf gleicher Drehzahl gehalten bzw. nicht drehbar fixiert werden. Die Kopplung verschiedener Bauteile wird im Allgemeinen durch Bremsen oder Lamellenkupplungen bewerkstelligt.

Es sind Planetenträger für Getriebe bekannt, die aus einem ein- oder mehrteiligen Tragflansch für die Planetenräder und einem rotationssymmetrischen topfartigen Teil bestehen. An letzterem ist üblicherweise eine Verzahnung für Kupplungs- oder Bremslamellen angebracht. Eine derartige Vorrichtung ist aus gattungsgemäßen DE 195 44 197 bekannt. Danach ist der Planetenträger aus einer Lagerbasis und einem Lagerdeckel aufgebaut, die, durch Abstandssäulen getrennt, zwei parallel zueinander beabstandete Lagerebenen definieren. Die Verbindung zwischen der Lagerbasis und dem Lagerdeckel wird über an den offenen Enden der Abstandssäulen angebrachte radial nach außen weisende Flanschplatten mittels Schweißverbindung hergestellt. Dabei sind die Flanschplatten über Ringsegmente miteinander verbunden. Weiterhin wird ausgeführt, dass die Lagerbasis als Guss- oder Schmiedeteil hergestellt sein soll, was dazu führt, dass die Lagerbasis im Bereich der Abstandssäulen kostenintensiv nachbearbeitet werden muss. Weitere Nachteile dieser Lösung sind hohe Herstellungskosten von Gieß- oder Schmiedeteilen, deren hohes Gewicht und geringe Festigkeit im Bereich von Kanten.

Eine weitere Ausführung eines Planetenträgers ist in der Patentschrift DE 43 02 844 dargestellt. Hierbei handelt es sich um einen Planetenträger der aus einem Planetenträgernabenteil und einem Seitenwandbauteil besteht, die als Fließpressteil bzw. Blechpressteil ausgebildet sind. Das Seitenwandbauteil ist ein topfförmig ausgeführter Lamellenkörper, während das Planetenträgernabenteil aus einer ringförmigen Scheibe und einem rohrförmigen Ansatz besteht. Beide Bauteile sind, mit Ausnahme von Ausbuchtungen, die sich in axialer Richtung erstrecken, rotationssymmetrisch. Die Ausbuchtungen erstrecken sich vom Boden des Seitenwandbauteils in axialer Richtung nach außen und von der Scheibe des Planetenträgernabenteils axial vom ringförmigen Ansatz weg. Die Form der axialen Ausbuchtungen macht aufwändige Verfahrensschritte während des Umformungsprozesses nötig.

Beim Zusammenbau des Planetenträgers werden die beiden Bauteile im Bereich der Ausbuchtungen miteinander verschweißt. Dabei muß sichergestellt werden, dass sie sowohl in axialer als auch in radialer und Umfangsrichtung exakt positioniert sind. Dies erfordert enorme Genauigkeit bei der Ausbildung der Ausbuchtungen und aufwändige Positionierungs- und Zentrierungsmaßnahmen bei der Herstellung der Schweißverbindung, was der wirtschaftlichen Fertigung der Planetenträger entgegensteht.

### Zusammenfassung der Erfindung

Der Erfindung liegt daher die Aufgabe zu Grunde, diese geschilderten Nachteile zu vermeiden und somit einen gewichtsoptimierten Planetenträger zu schaffen, dessen Einzelteile kostengünstig und mit hoher Maßgenauigkeit hergestellt und ohne aufwändige Positionierungsmaßnahmen zusammengefügt werden können.

Erfindungsgemäß wird diese Aufgabe dadurch gelöst, dass der Planetenträger aus einem einteiligen, stufenartig ausgeführten Außentopf aufgebaut ist, in den ein ebenfalls einteiliger, stufenartig ausgeführter Innentopf eingesetzt ist. Innen- und Außentopf bestehen jeweils aus einem Hülsenabschnitt, der an einem Ende durch eine radial nach innen verlaufende ringförmige Scheibe mit einer Hülse verbunden ist, die über einen sich radial nach innen erstreckenden Boden in einen rohrförmigen Ansatz übergeht. Die Außendurchmesser des Hülsenabschnittes, der Hülse und des rohrförmigen Ansatzes des Innentopfes sind den jeweiligen Innendurchmessern des Außentopfes angepasst. Die axiale Ausdehnung des Hülsenabschnittes des Innentopfes ist kleiner ausgeführt als die des Hülsenabschnittes des Außentopfes und die Summe der axialen Erstreckungen des Hülsenabschnittes und der Hülse des Innentopfes größer ausgeführt ist, als die Erstreckung des Hülsenabschnittes des Außentopfes, so dass die Hülsenabschnitte des Außen- und Innentopfes stirnseitig abschließen, wenn zwischen den ringförmigen Scheiben Planetenräder angeordnet sind.

Zusätzlich sind Ausnehmungen im Hülsenabschnitt des Außentopfes und der Hülse des Innentopfes angeordnet, durch die die Planetenräder radial hindurchgeführt sind.

In einer zweiten vorteilhaften Ausführung wird die Aufgabe erfindungsgemäß dadurch gelöst, daß der Planetenträger für Getriebe aus einem einteiligen, stufenartig ausgeführten Außentopf aufgebaut ist, in den ein ebenfalls einteiliger, stufenartig ausgeführter Innentopf eingesetzt ist. Außen- und Innentopf bestehen jeweils aus einer ringförmigen Scheibe, an deren radialer inneren Begrenzung sich jeweils eine Hülse anschließt, die über einen sich radial nach innen erstreckenden Boden in einen rohrförmigen Ansatz übergeht. An der radial äußeren Begrenzung der ringförmigen Scheibe des Außentopfes schließt sich ein von der Hülse axial weg erstreckender Hülsenabschnitt an. Die Außendurchmesser der Scheibe, der Hülse und des rohrförmigen Ansatzes des Innentopfes sind den Innendurchmessern des Hülsenabschnittes, der Hülse und des rohrförmigen Ansatzes des Außentopfes angepaßt. Außen- und Innentopf sind derart ausgeführt und axial ineinander angeordnet, dass der rohrförmige Ansatz des Innentopfes zumindest teilweise innerhalb des rohrförmigen Ansatzes des Außentopfes, die Hülse des Innentopfes zumindest teilweise innerhalb der Hülse des Außentopfes und die ringförmige Scheibe innerhalb des Hülsenabschnittes liegt. Weiterhin sind Ausnehmungen im Hülsenabschnitt des Außentopfes und der Hülse des Innentopfes angeordnet, durch die zwischen den Scheiben angebrachte Planetenräder radial hindurchgeführt sind.

Oben beschriebene Anordnungen ermöglichen es mit einem Minimum an Einzelteilen einen erfindungsgemäßen Planetenträger zu realisieren, der zwischen den ringförmigen Scheiben des Außen- und Innentopfes einen ringförmig umlaufenden Hohlraum zur Aufnahme von Planetenrädern und einen stirnseitig angebrachten Lamellenkörper für Kupplungs- oder Bremslamellen aufweist. Die Planetenräder greifen durch die Ausnehmungen in der Hülse des Innentopfes bzw. des Hülsenabschnittes des Außentopfes und stehen so mit einem koaxial zur Planetenträgerachse angeordneten Sonnenrad bzw. einem koaxial dazu angeordneten Hohlrad im Eingriff. Der rohrförmige Ansatz des Innentopfes dient zur Aufnahme einer Antriebswelle auf der das Sonnenrad drehbar gelagert ist. Das Sonnenrad ist mittels des Axiallagers drehbar gegenüber dem Planetenträger gelagert. Durch die Ausführung des Planetenträgers aus zwei ineinander eingesetzten rotationssymmetrischen oder nahezu rotationssymmetrischen Töpfen, wobei die Außendurchmesser der axial verlaufenden Komponenten des Innentopfes den Innendurchmessern der axial verlaufenden Komponenten des Außentopfes angepasst sind, wird auf einfache Art und Weise das Zusammenfallen der Mittelachsen der beiden Töpfe sichergestellt. Der stirnseitige bündige Abschluß der Hülsenabschnitte gewährleistet die axiale Positionierung.

Vorteilhafterweise ist der Hülsenabschnitt des Außentopfes mit einer Außenverzahnung für Brems- oder Kupplungslamellen versehen.

Weiterhin wird vorgeschlagen, dass der Boden des Innentopfes mit einer ringförmigen muldenartigen Aufnahme versehen ist, in der ein Axiallager angeordnet ist.

In weiteren Ausführungsformen der Erfindung ist vorgesehen, dass der Außen- und/oder Innentopf durch spanloses Umformen eines Stahlblechs hergestellt werden. Vorteile dieser Ausführungsformen sind die hohe Festigkeit und das geringe Gewicht, die einfache Herstellung und die hohe Maßgenauigkeit und Qualität der Bauteile, wodurch kostspielige Nachbearbeitungen entfallen.

Weiterhin ist vorgesehen, dass fluchtende Bohrungen in den ringförmigen Scheiben des Außen- und Innentopfes zur Aufnahme von Bolzen angeordnet sind, auf denen Planetenräder gelagert sind.

In einer weiteren vorteilhaften Ausführung der Erfindung sind die Hülsenabschnitte des Außen- und Innentopfes im Überdeckungsbereich bzw. der Hülsenabschnitt des Außentopfes und die Scheibe des Innentopfes kraftschlüssig verbunden. Dies verhindert Wandern der Töpfe gegeneinander in axialer Richtung und in Umfangsrichtung. Im ersten Fall kann die Wandstärke der ringförmigen Abschnitte im Überdeckungsbereich, bei gleicher Belastbarkeit, geringer ausfallen und dadurch ein zusätzlicher Gewichtsvorteil entstehen.

Weiterhin ist vorgesehen, dass die Hülsenabschnitte des Außen- und Innentopfes stirnseitig, ringförmig umlaufende miteinander verschweißt sind. Alternativ dazu können die Hülsenabschnitte stirnseitig mit einer Bördelung versehen sein und im Bereich der Bördelung in Umfangsrichtung miteinander verschweißt werden.

Für die zweite Ausführungsform wird ebenfalls vorgeschlagen die ringförmige Scheibe des Innentopfes mit dem Hülsenabschnitt des Außentopfes ringförmig umlaufend zu verschweißen.

Durch die ringförmig umlaufende Schweißverbindung wird eine feste Verbindung hoher Stabilität zwischen den beiden Töpfen hergestellt, die Relativbewegungen in axialer Richtung und Umfangsrichtung der beiden Bauteile verhindert.

Vorgeschlagen wird außerdem, dass die Schweißverbindung zwischen dem Außen- und dem Innentopf mittels eines Laserschweißverfahrens erfolgt.

Zusätzlich können die Hülsenabschnitte des Außen- und Innentopfes bzw. der Hülsenabschnitt des Außentopfes und die ringförmige Scheibe mit formschlüssigen Mitteln versehen sein, die miteinander in Eingriff stehen.

Dies kann in Form von einer Innenverzahnung im Hülsenabschnitt des Außentopfes und einer in diese eingreifende Verzahnung am Hülsenabschnitt des Innentopfes bzw. an der ringförmige Scheibe des Innentopfes ausgeführt sein. Dadurch entsteht ein Formschluss zwischen Außen- und Innentopf, der die Stabilität gegen Relativbewegungen in Umfangsrichtung erhöht.

Eine weitere vorteilhafte Ausführung der Erfindung sieht vor, dass der Außen- und Innentopf aus Einsatzstahl gefertigt sind und ein Innenring eines Wälzlagers oder Freilaufs, in Form einer gehärteten Winkelhülse, die Hülse des Außentopfes übergreift und die beiden Teile form- und/oder kraftschlüssig verbunden sind. Dadurch werden die Materialkosten erheblich minimiert.

In einer weiteren Konkretisierung der Erfindung ist die Innenfläche des rohrförmigen Ansatzes des Innentopfes mit eine Kerbverzahnung versehen. Dadurch kann eine formschlüssige Verbindung mit einer Welle hergestellt werden.

### Kurze Beschreibung der Zeichnungen

Weitere Merkmale der Erfindung ergeben sich aus der nachfolgenden Beschreibung und aus den Zeichnungen, in der Ausführungsbeispiele der Erfindung vereinfacht dargestellt sind. Es zeigen:
- Figur 1: eine schematische Darstellung eines Planetengetriebes,
- Figur 2: einen Längsschnitt durch einen erfindungsgemäßen Planetenträger,
- Figur 3: einen Querschnitt durch einen erfindungsgemäßen Planetenträger entlang Linie III - III aus Figur 2,
- Figur 4: einen Längsschnitt durch eine weitere Ausführungsform eines erfindungsgemäßen Planetenträgers,
- Figur 5: einen erfindungsgemäßen Planetenträger nach Figur 4 in Explosionsdarstellung.

### Ausführliche Beschreibung der Zeichnungen

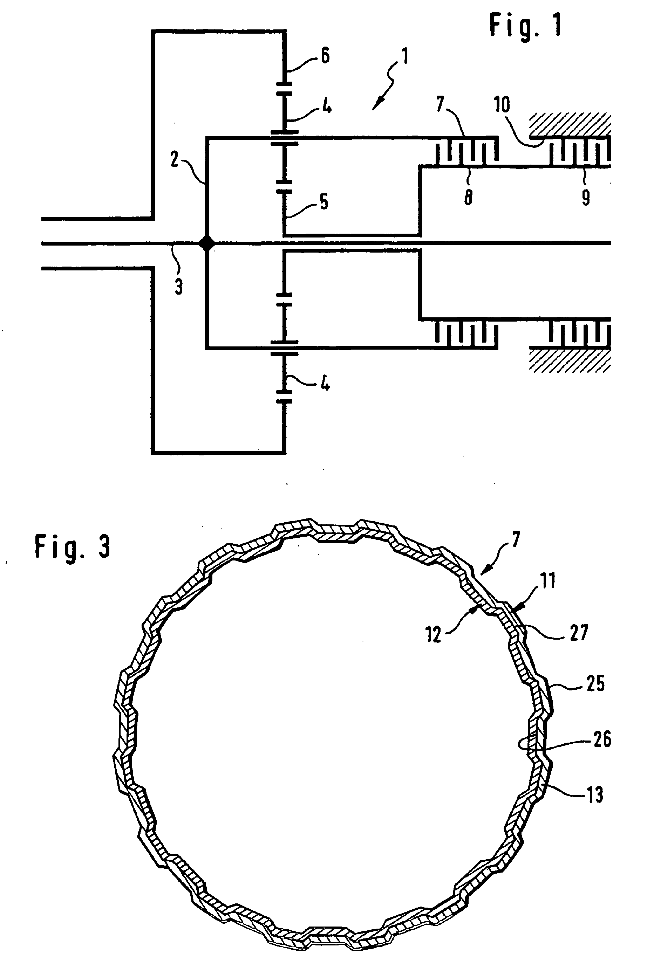

Figur 1 zeigt als Anwendungsbeispiel eines erfindungsgemäßen Planetenträgers eine schematische Darstellung eines Planetengetriebes 1, wobei mit 2 ein Planetenträger bezeichnet ist. Der Planetenträger 2 ist drehfest mit einer Welle 3 verbunden und ist außerhalb seiner Längsachse mit Planetenrädern 4 versehen. Die Drehachse der Planetenräder 4 liegt parallel zur Längsachse des Planetenträgers 2. Konzentrisch und drehbar auf dem Planetenträger 2 bzw. der Welle 3 gelagert sind ein Sonnenrad 5 und ein Hohlrad 6 angeordnet, die mit den Planetenrädern 4 in ständigem Eingriff stehen. Der Planetenträger 2 ist mit einem ersten Lamellenkörper 7 versehen. Über einen zweiten Lamellenkörper 8 , der mit dem Sonnenrad 5 verbunden ist, können diese Komponenten gekoppelt werden. Mit Hilfe eines dritten Lamellenkörpers 9, der mit dem Sonnenrad 5 verbunden ist, kann dieses über einen gehäusefesten vierten Lamellenkörper 10 abgebremst werden.

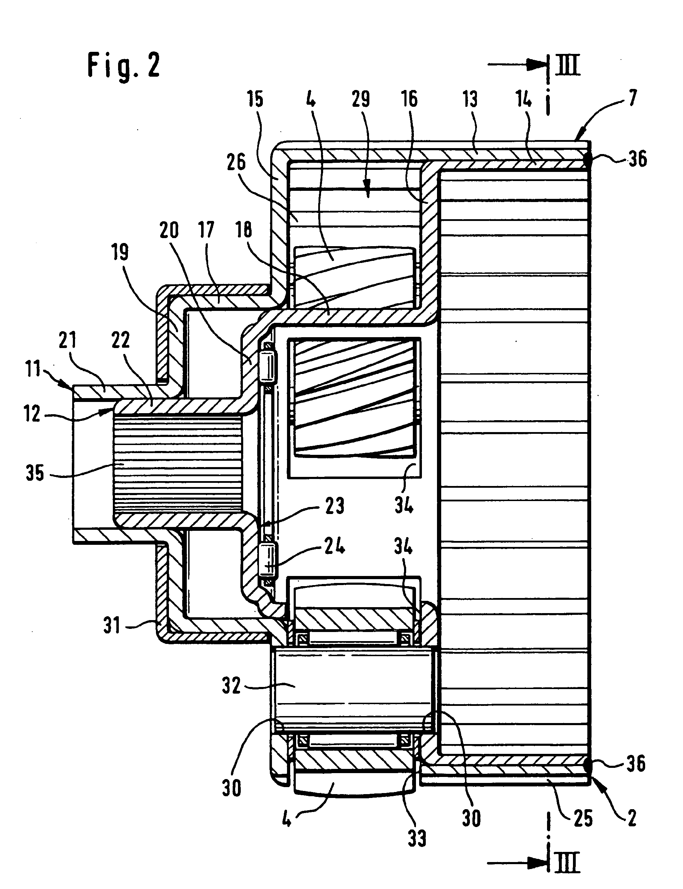

In Figur 2 ist mit 2 ein erfindungsgemäßer Planetenträger bezeichnet, der aus einem Außentopf 11 und einem Innentopf 12 besteht. Beide Bauteile sind einteilig und stufenartig ausgeführt. Außen- und Innentopf bestehen jeweils aus einem Hülsenabschnitt 13 und 14, der an einem Ende durch eine radial nach innen verlaufende ringförmige Scheibe 15 und 16 mit jeweils einer ringförmigen Hülse 17 und 18 verbunden ist. Diese sind über je einen sich radial nach innen erstreckenden Boden 19 und 20 mit je einem rohrförmigen Ansatz 21 und 22 verbunden. Der Boden 20 des Innentopfes 12 ist mit einer ringförmigen muldenartigen Aufnahme 23 versehen, in der ein Axiallager 24 zur Lagerung eines nicht dargestellten Sonnenrades angebracht ist. Außen- 11 und Innentopf 12 sind, wie im Weiteren dargelegt wird, so dimensioniert, daß sie ineinander angeordnet werden können. Dabei ist der Innendurchmesser des Hülsenabschnittes 13 dem Außendurchmesser des Hülsenabschnittes 14 angepaßt. Der Vorteil dieses Konzeptes ist, daß keine Zentrierungsmaßnahmen der Komponenten erforderlich sind, da dies durch deren Form und Bemaßung automatisch erfolgt.

Weiterhin ist eine kraftschlüssige Verbindung zwischen den Hülsenabschnitten 13 und 14 vorgesehen, wodurch die Wandstärke im Bereich der Überdeckungen, bei gleicher Tragfähigkeit des Bauteils, kleiner als im übrigen Bauteil gewählt werden kann und damit eine Gewichtsreduzierung erreicht wird.

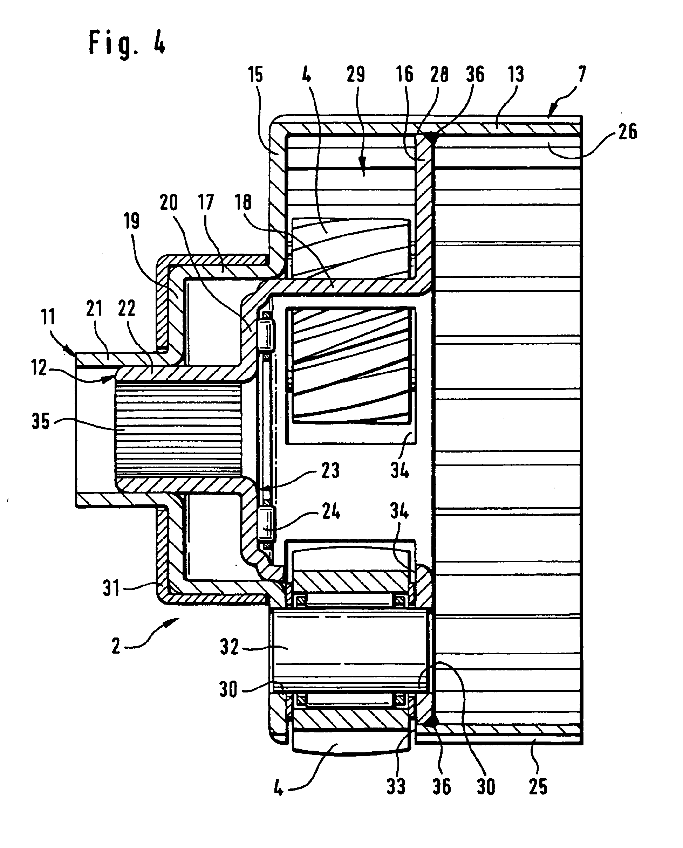

Wie aus Figur 3 ersichtlich wird sind in dem Hülsenabschnitt 13 des Außentopfes 11 als wellenartige Profilierung oder Durchstellung eine Außenverzahnung 25, für den Eingriff von nicht dargestellten Kupplungs- oder Bremslamellen, und eine Innenverzahnung 26 ausgebildet. Weiterhin erkennbar ist, dass ebenfalls in dem Hülsenabschnitt 14 des Innentopfes 12 eine erste Verzahnung 27 angebracht ist, wobei diese ebenfalls als Innen- und Außenverzahnung oder nur als Außenverzahnung realisiert sein kann. Die erste Verzahnung 27 ist derart ausgebildet, dass sie formschlüssig in die Innenverzahnung 26 eingreift. Dies wirkt als zusätzliche Sicherung gegen Relativbewegung in Umfangsrichtung.

Weiterhin sieht die Erfindung vor, dass die beiden Töpfe im Bereich der Hülsenabschnitte 13 und 14 stirnseitig in axialer Richtung bündig abschließen und mittels einer ringförmig umlaufenden Schweißverbindung 36 stirnseitig gekoppelt sind um Bewegungen des Außentopfes 11 relativ zum Innentopf 12 zu verhindern. Weiterhin denkbar ist, dass die stirnseitig bündig abschließenden Hülsenabschnitte 13 und 14 stirnseitig mit einer Bördelung versehen sind. Die Töpfe 11 und 12 sind in diesem Fall im Bereich der Bördelung in Umfangsrichtung ringförmig umlaufend miteinander verschweißt.

Die axiale Ausdehnung des Hülsenabschnitts 13 ist größer ausgeführt, als die des Hülsenabschnitts 14, wodurch ein ringförmiger Hohlraum 29 zur Aufnahme von Planetenrädern 4 entsteht. Der Hohlraum 29 wird in radialer Richtung durch den Hülsenabschnitt 13 und die Hülse 18 und in axialer Richtung durch die sich parallel gegenüberstehenden ringförmigen Scheiben 15 und 16 begrenzt. In den Scheiben 15 und 16 sind zueinander fluchtende Bohrungen 30 zur Aufnahme von Bolzen 32 vorgesehen, auf denen die Planetenräder 4 gelagert sind Die Bolzen 32 sind in den Bohrungen 30 verstemmt. Dadurch sind sie gegen Bewegungen sowohl in axialer als auch in Umfangsrichtung gesichert. Die Hülse 18 und der Hülsenabschnitt 13 sind mit Ausnehmungen 33 und 34 versehen. Diese erstrecken sich in axialer Richtung zwischen den ringförmigen Scheiben 15 und 16. Die Ausdehnung in Umfangsrichtung ist so gehalten, dass die Planetenräder 4, um die Bolzen 32 frei drehbar sind und durch die Ausnehmungen 33 und 34 greifen können. Dabei steht die Verzahnung der Planetenräder 4 mit der Verzahnung eines nicht dargestellten Hohlrades und eines ebenfalls nicht dargestellten Sonnenrades im dauerhaften Eingriff.

Die axiale Ausdehnung der Hülse 18 ist so gewählt, dass sie in den Bereich der Hülse 17 eingreift, wobei der Außendurchmesser der Hülse 18 dem Innendurchmesser der Hülse 17 angepasst ist. Dadurch wird eine Unterstützung der Hülse 17 in radialer Richtung erreicht. Des Weiteren erstreckt sich der rohrförmige Ansatz 22 in den rohrförmigen Ansatz 21, wobei der Außendurchmesser des Ansatzes 22 ebenfalls dem Innendurchmesser des Ansatzes 21 angepasst ist.

Sowohl Innen- als auch Außentopf sind in einem Tiefziehverfahren durch spanlose Umformung aus einem Einsatzstahlblech hergestellt. Mit Ausnahme der Bohrungen 30 können die einzelnen Komponenten in wenigen Prozeßschritten gefertigt werden. Dies erlaubt die kostengünstige Herstellung der Einzelteile bei gleichzeitiger hoher Maßgenauigkeit. Weiterhin können nachbearbeitende Schritte, insbesondere im Bereich der Schweißverbindung 36, entfallen.

Die Hülse 17 des Außentopfes 11 wird von einer Winkelhülse 31 übergriffen, die aus gehärtetem Stahl besteht und deren Mantelfläche als Innenring eines Freilaufs ausgeführt ist, auf dem ein nicht dargestelltes Hohlrad drehbar angeordnet ist.

Am Innenumfang des rohrförmigen Ansatzes 22 ist eine Kerbverzahnung 35 angebracht, wodurch eine nicht dargestellte Welle formschlüssig in Wirkverbindung mit dem Planetenträger treten kann. Es kann sich hierbei um eine An- oder Abtriebswelle handeln.

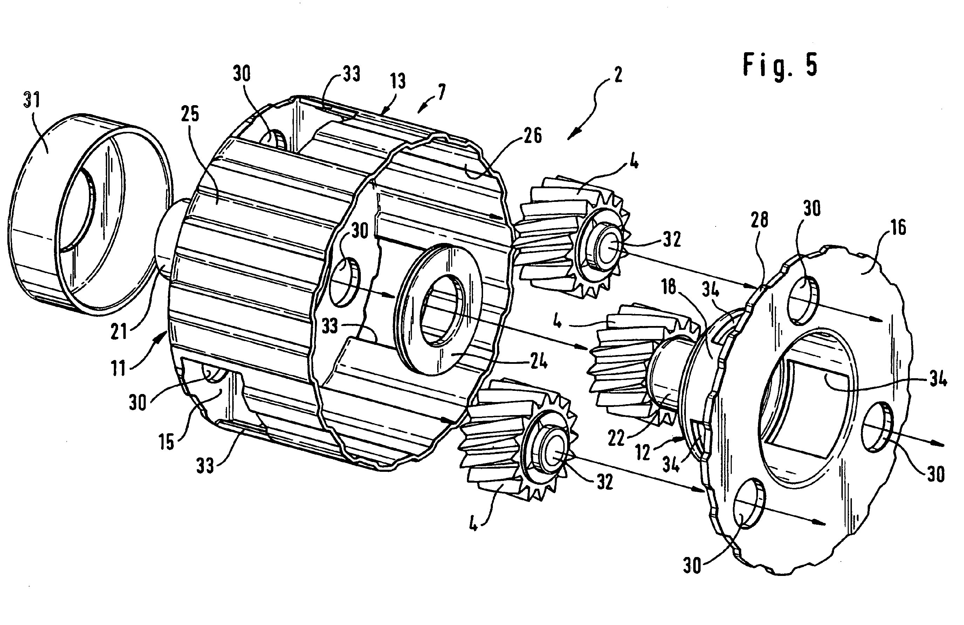

In Figur 4 und Figur 5 ist eine zweite Ausführungsform eines erfindungsgemäßen Planetenträgers dargestellt. Dieser ist in Ausführungsform und Funktion größtenteils identisch mit dem In Figur 2 und Figur 3 dargestelltem, deshalb wurden für identische Teile die gleichen Bezugszahlen verwendet. Der Unterschied zwischen den zwei Ausführungsformen liegt in der Ausführung des Innentopfes 12. Dieser besteht in dieser Ausführungsform aus einer ringförmigen Scheibe 16 an dessen radialer inneren Begrenzung sich eine Hülse 18 anschließt, die über einen radial nach innen gerichteten Boden 20 in einen rohrförmigen Ansatz 22 übergeht. Im Vergleich zur ersten Ausführungsform fehlt also lediglich der Hülsenabschnitt 14 des Innentopfes 12. An der äußeren Begrenzung der ringförmigen Scheibe 16 ist eine zweite Verzahnung 28 angebracht. Der Innentopf 12 ist derart ausgeführt und derart axial innerhalb des Außentopfes 11 angeordnet, daß der rohrförmige Ansatz 22 des Innentopfes 12 zumindest teilweise innerhalb des rohrförmigen Ansatzes 21 des Außentopfes 11 liegt. Weiterhin liegt die Hülse 18 des Innentopfes 12 zumindest teilweise innerhalb der Hülse 17 des Außentopfes 11 und die ringförmige Scheibe 16 innerhalb des Hülsenabschnitts 13 des Außentopfes 11. Dabei greift die zweite Verzahnung 28 form- und kraftschlüssig in die Innenverzahnung 26 des Außentopfes 11 ein und kann weiterhin durch eine ringförmig umlaufende Schweißverbindung 36 gegen axiales Verschieben oder Verdrehung in Umfangsrichtung gesichert werden.

Durch die passgenaue Anordnung der zwei nahezu rotationssymmetrischen Bauteile ineinander wird erreicht, daß aufwändige Zentrierungsmaßnahmen beim Zusammenbau entfallen können. Die einzelnen Komponenten sind leicht und kostengünstig herzustellen und durch das Ausgangsmaterial in Form von Blech ist eine leichte Bauweise realisiert.

### Bezugszahlenliste

- 1: Planetengetriebe
- 2: Planetenträger
- 3: Welle
- 4: Planetenrad
- 5: Sonnenrad
- 6: Hohlrad
- 7: erster Lamellenkörper
- 8: zweiter Lamellenkörper
- 9: dritter Lamellenkörper
- 10: vierter Lamellenkörper
- 11: Außentopf
- 12: Innentopf
- 13: Hülsenabschnitt
- 14: Hülsenabschnitt
- 15: ringförmige Scheibe
- 16: ringförmige Scheibe
- 17: Hülse
- 18: Hülse
- 19: Boden
- 20: Boden
- 21: Ansatz
- 22: Ansatz
- 23: Aufnahme
- 24: Axiallager
- 25: Außenverzahnung
- 26: Innenverzahnung
- 27: erste Verzahnung
- 28: zweite Verzahnung
- 29: Hohlraum
- 30: Bohrung
- 31: Winkelhülse
- 32: Bolzen
- 33: Ausnehmung
- 34: Ausnehmung
- 35: Kerbverzahnung
- 36: Schweißverbindung

## Patentansprüche

1. Planetenträger (2) für Getriebe mit
- einem einteiligen, stufenartig ausgeführten Außentopf (11), in den ein ebenfalls einteiliger, stufenartig ausgeführter Innentopf (12) eingesetzt ist,
- wobei der Außen- (11) und der Innentopf (12) jeweils aus einem Hülsenabschnitt (13,14) bestehen, der an einem Ende durch eine radial nach innen verlaufende ringförmige Scheibe (15,16) mit einer Hülse (17,18) verbunden ist, die über einen sich radial nach innen erstreckenden Boden (19,20) in einen rohrförmigen Ansatz (21,22) übergeht,
- wobei die Außendurchmesser des Hülsenabschnittes (14), der Hülse (18) und des rohrförmigen Ansatzes (22) des Innentopfes (12) den jeweiligen Innendurchmessern des Außentopfes (11) angepaßt sind,
- wobei die axiale Ausdehnung des Hülsenabschnittes (14) des Innentopfes (12) kleiner ausgeführt ist als die des Hülsenabschnittes (13) des Außentopfes (11) und die Summe der axialen Erstreckungen des Hülsenabschnittes (14) und der Hülse (18) des Innentopfes (12) größer ausgeführt ist, als die Erstreckung des Hülsenabschnittes (13) des Außentopfes (11), so dass die Hülsenabschnitte (13,14) des Außen- (11) und Innentopfes (12) strinseitig bündig abschließen, wenn zwischen den ringförmigen Scheiben (15 und 16) Planetenräder (4) angeordnet sind und
- wobei Ausnehmungen (33,34) im Hülsenabschnitt (13) des Außentopfes (11) und der Hülse (18) des Innentopfes (12) angeordnet sind, durch die die Planetenräder (4) radial hindurchgeführt sind.

2. Planetenträger (2) für Getriebe mit
- einem einteiligen, stufenartig ausgeführten Außentopf (11), in den ein ebenfalls einteiliger, stufenartig ausgeführter Innentopf (12) eingesetzt ist, wobei der Innen- (12) und der Außentopf (11) jeweils aus einer ringförmigen Scheibe (15,16) besteht, an deren radial inneren Begrenzungen sich jeweils eine Hülse (17,18) anschließt, die über einen sich radial nach innen erstreckenden Boden (19,20) in einen rohrförmigen Ansatz (21,22) übergeht, wobei sich an der radial äußeren Begrenzung der ringförmigen Scheibe (15) des Außentopfes (11) ein sich von der Hülse (17) axial weg erstreckender Hülsenabschnitt (13) anschließt,
- wobei die Außendurchmesser der Scheibe (16), der Hülse (18) und des rohrförmigen Ansatzes (22) des Innentopfes (12) den Innendurchmessern des Hülsenabschnittes (13), der Hülse (17) und des rohrförmigen Ansatzes (21) des Außentopfes (11) angepaßt sind,
- wobei Außen- (11) und Innentopf (12) so ausgeführt und axial ineinander angeordnet sind, dass der rohrförmige Ansatz (22) des Innentopfes (12) zumindest teilweise innerhalb des rohrförmigen Ansatzes (21) des Außentopfes (11) liegt, dass die Hülse (18) des Innentopfes (12) zumindest teilweise innerhalb der Hülse (17) des Außentopfes (11) liegt und dass die ringförmige Scheibe (16) innerhalb des Hülsenabschnittes (13) liegt und
- wobei Ausnehmungen (33,34) im Hülsenabschnitt (13) des Außentopfes (11) und der Hülse (18) des Innentopfes (12) angeordnet sind, durch die zwischen den Scheiben (15 und 16) angebrachte Planetenräder (4) radial hindurchgeführt sind.

3. Planetenträger (2) für Getriebe nach einem der Ansprüche 1 oder 2 **dadurch gekennzeichnet**, der Hülsenabschnitt (13) des Außentopfes (11) mit einer Außenverzahnung (25) für Kupplungs- oder Bremslamellen versehen ist.

4. Planetenträger (2) für Getriebe nach einem der Ansprüche 1 oder 2 **dadurch gekennzeichnet, daß** der Boden (20) des Innentopfes (12) mit einer ringförmigen muldenartigen Aufnahme (23) versehen ist, in der ein Axiallager (24 angebracht ist.

5. Planetenträger (2) für Getriebe nach einem der Ansprüche 1 oder 2 **dadurch gekennzeichnet, daß** der Außentopf (11) durch spanloses Umformen eines Stahlbleches hergestellt ist.

6. Planetenträger (2) für Getriebe nach einem der Ansprüche 1 oder 2 **dadurch gekennzeichnet, daß** der Innentopf (12) durch spanloses Umformen eines Stahlbleches hergestellt ist

7. Planetenträger (2) für Getriebe nach einem der Ansprüche 1 und 2 **dadurch gekennzeichnet, daß** fluchtende Bohrungen (30) in den ringförmigen Scheiben (15,16) des Außen- (11) und Innentopfes (12), zur Aufnahme von Bolzen (32), angeordnet sind, auf denen Planetenräder (4) gelagert sind.

8. Planetenträger (2) für Getriebe nach Anspruch 1 **dadurch gekennzeichnet, daß** die Hülsenabschnitte (13,14) des Außen- (11) und Innentopfes (12) im Überdeckungsbereich kraftschlüssig verbunden sind.

9. Planetenträger (2) für Getriebe nach Anspruch 2 **dadurch gekennzeichnet, daß** der Hülsenabschnitte (13) des Außentopfes (11) mit der ringförmigen Scheibe (16) des Innentopfes (12) kraftschlüssig verbunden ist.

10. Planetenträger (2) für Getriebe nach Anspruch 1 **dadurch gekennzeichnet, daß** die Hülsenabschnitte (13,14) des Außen- (11) und Innentopfes (12) stirnseitig, ringförmig umlaufend miteinander verschweißt sind.

11. Planetenträger (2) für Getriebe nach Anspruch 1 **dadurch gekennzeichnet, daß** die Hülsenabschnitte (13,14) stirnseitig mit einer Bördelung versehen sind und im Bereich der Bördelung in Umfangsrichtung miteinander verschweißt sind.

12. Planetenträger (2) für Getriebe nach Anspruch 2 **dadurch gekennzeichnet, daß** die ringförmige Scheibe (16) des Innentopfes (12) mit dem Hülsenabschnitt (13) des Außentopfes (11) ringförmig umlaufend verschweißt ist.

13. Planetenträger (2) für Getriebe nach einem der Ansprüche 10, 11 oder 12 **dadurch gekennzeichnet, daß** die Schweißverbindung zwischen dem Außen- und Innentopf mittels eines Laserschweißverfahrens erfolgt.

14. Planetenträger (2) für Getriebe nach Anspruch 1 **dadurch gekennzeichnet, daß** der Hülsenabschnitt (13) des Außentopfes (11) und der Hülsenabschnitt (14) des Innentopfes (12) mit formschlüssigen Mitteln versehen sind, die miteinander in Eingriff stehen.

15. Planetenträger (2) für Getriebe nach Anspruch 14 **dadurch gekennzeichnet, daß** die formschlüssigen Mittel durch eine Innenverzahnung (26) im Hülsenabschnitt (13) des Außentopfes (11) und einer ersten Verzahnung (27) im Hülsenabschnitt (14) des Innentopfes (12) gebildet werden.

16. Planetenträger (2) für Getriebe nach Anspruch 2 **dadurch gekennzeichnet, daß** der Hülsenabschnitt (13) des Außentopfes (11) und die ringförmige Scheibe (16) des Innentopfes (12) mit formschlüssigen Mitteln versehen sind, die miteinander in Eingriff stehen.

17. Planetenträger (2) für Getriebe nach Anspruch 16 **dadurch gekennzeichnet, daß** die formschlüssigen Mittel durch eine Innenverzahnung (26) im Hülsenabschnitt (13) des Außentopfes (11) und einer zweiten Verzahnung (28) an der ringförmige Scheibe (16) des Innentopfes (12) gebildet werden.

18. Planetenträger (2) für Getriebe nach einem der Ansprüche 1 oder 2 **dadurch gekennzeichnet, daß** der Außen- (11) und Innentopf (12) aus Einsatzstahl gefertigt sind und ein Innenring eines Wälzlagers oder Freilaufes, in Form einer gehärteten Winkelhülse (31), die Hülse (17) des Außentopfes (11) übergreift und die beiden Teile form- und/oder kraftschlüssig verbunden sind.

19. Planetenträger (2) für Getriebe nach einem der Ansprüche 1 oder 2 **dadurch gekennzeichnet, daß** die Innenfläche des rohrförmigen Ansatzes (22) des Innentopfes (12) mit einer Kerbverzahnung (35) versehen ist.

## Claims

1. Planet carrier (2) for transmissions
- having a one-piece stepped outer pot (11), into which a likewise stepped one-piece inner pot (12) is inserted,
- each of the outer pot (11) and the inner pot (12) comprising a bushing section (13, 14) that is connected at one end through a radially inwards extending annular disk (15, 16) to a bushing 17, 18) that merges through a radially inwards extending bottom (19, 20) into a tubular extension (21, 22),
- the outer diameters of the bushing section (14), the bushing (18) and the tubular extension (22) of the inner pot (12) being matched to the respective outer diameters of the outer pot (11),
- the axial dimension of the bushing section (14) of the inner pot (12) being smaller than that of the bushing section (13) of the outer pot (11) and the sum of the axial lengths of the bushing section (14) and the bushing (18) of the inner pot (12) is larger than the length of the bushing section (13) of the outer pot (11), so that the bushing sections (13, 14) of the outer and the inner pots (11, 12) end flush with each other when planet gears (4) are arranged between the annular disks (15 and 16), and
- recesses (33, 34) being arranged in the bushing section (13) of the outer pot (11) and the bushing (18) of the inner pot (12) through which the planet gears (4) extend in radial direction.

2. Planet carrier (2) for transmissions
- having a one-piece stepped outer pot (11), into which a likewise one-piece stepped inner pot (12) is inserted, each of the inner pot (12) and the outer pot (11) comprising an annular disk (15, 16) from the radially inner borders of which a bushing (17, 18) starts that merges through a radially inwards extending bottom (19, 20) into a tubular extension (21, 22), a bushing section (13) that extends axially away from the bushing (17) starting from the radially outer border of the annular disk (15) of the outer pot (11),
- the outer diameters of the disk (16), the bushing (18) and the tubular extension (22) of the inner pot (12) being matched to the inner diameters of the bushing section (13), the bushing (17) and the tubular extension (21) of the outer pot (11),
- the outer pot (11) and the inner pot (12) being configured and axially inter-inserted in such a way that the tubular extension (22) of the inner pot (12) is situated at least partially within the tubular extension (21) of the outer pot (11), the bushing (18) of the inner pot (12) is situated at least partially within the bushing (17) of the outer pot (11) and the annular disk (16) is situated within the bushing section (13), and
- recesses (33, 34) being arranged in the bushing section (13) of the outer pot (11) and the bushing (18) of the inner pot (12) through which planet gears (4) mounted between the disks (15 and 16) extend in radial direction.

3. Planet carrier (2) for transmissions according to one of claims 1 or 2, **characterised in that** the bushing section (13) of the outer pot (11) is provided with an outer gearing (25) for clutch or brake plates.

4. Planet carrier (2) for transmissions according to one of claims 1 or 2, **characterised in that** the bottom (20) of the inner pot (12) is provided with annular, trough-shaped reception (23) in which a thrust bearing (24) is mounted.

5. Planet carrier (2) for transmissions according to one of claims 1 or 2, **characterised in that** the outer pot (11) is made by shaping a sheet steel without chip removal.

6. Planet carrier (2) for transmissions according to one of claims 1 or 2, **characterised in that** the inner pot (12) is made by shaping a sheet steel without chip removal.

7. Planet carrier (2) for transmissions according to one of claims 1 or 2, **characterised in that** aligned bores (30) are arranged in the annular disks (15, 16) of the outer pot (11) and the inner pot (12) for receiving pins (32) on which planet gears (4) are mounted.

8. Planet carrier (2) for transmissions according to claim 1, **characterised in that** the bushing sections (13, 14) of the outer pot (11) and the inner pot (12) are connected in the region of overlap by force locking.

9. Planet carrier (2) for transmissions according to claim 2, **characterised in that** the bushing section (13) of the outer pot (11) is connected to the annular disk (16) of the inner pot (12) by force locking.

10. Planet carrier (2) for transmissions according to claim 1, **characterised in that** the bushing sections (13, 14) of the outer pot (11) and the inner pot (12) are connected to each other at front ends by continuous annular welding.

11. Planet carrier (2) for transmissions according to claim 1, **characterised in that** the bushing sections (13, 14) are provided at front ends with a turned-over edge and are welded to each other in peripheral direction in the region of the turned-over edge.

12. Planet carrier (2) for transmissions according to claim 2, **characterised in that** the annular disk (16) of the inner pot (12) is annularly, continuously welded to the bushing section (13) of the outer pot (11).

13. Planet carrier (2) for transmissions according to one of claims 10, 11 or 12, **characterised in that** the weld joint between the outer and the inner pot is made by a laser welding method.

14. Planet carrier (2) for transmissions according to claim 1, **characterised in that** the bushing section (13) of the outer pot (11) and the bushing section (14) of the inner pot (12) are provided with mating means that are interlocked with each other.

15. Planet carrier (2) for transmissions according to claim 14, **characterised in that** the mating means are constituted by an inner gearing (26) in the bushing section (13) of the outer pot (11) and a first gearing (27) in the bushing section (14) of the inner pot (12).

16. Planet carrier (2) for transmissions according to claim 2, **characterised in that** the bushing section (13) of the outer pot (11) and the annular disk (16) of the inner pot (12) are provided with mating means that are interlocked with each other.

17. Planet carrier (2) for transmissions according to claim 16, **characterised in that** the mating means are constituted by an inner gearing (26) in the bushing section (13) of the outer pot (11) and a second gearing (28) on the annular disk (16) of the inner pot (12).

18. Planet carrier (2) for transmissions according to one of claims 1 or 2, **characterised in that** the outer pot (11) and the inner pot (12) are made of case-hardening steel, and an inner ring of a rolling bearing or a free-wheel in the form of a hardened, angled bushing (31) engages over the bushing (17) of the outer pot (11), and the two parts are connected by interlocking and/or force locking.

19. Planet carrier (2) for transmissions according to one of claims 1 or 2, **characterised in that** the inner surface of the tubular extension (22) of the inner pot (12) is provided with a channel gearing (35).

## Revendications

1. Porte-satellites (2) pour engrenages
- ayant un pot extérieur (11) monobloc à configuration étagée dans lequel est inséré un pot intérieur (12) monobloc également à configuration étagée,
- ledit pot extérieur (11) et ledit pot intérieur (12) comprenant, à chaque fois, une section (13, 14) en forme de douille, qui est reliée, à l'une de ses extrémités, par un disque annulaire (15, 16) s'étendant radialement vers l'intérieur, à une douille (17, 18) qui se raccorde à un prolongement tubulaire (21, 21) par un fond (19, 20) s'étendant radialement vers l'intérieur,
- les diamètres extérieurs de la section (14) en forme douille, de la douille (18) et du prolongement tubulaire (22) du pot intérieur (12) étant adaptés aux diamètres intérieurs respectifs du pot extérieur (11),
- l'étendue axiale de la section (14) en forme de douille du pot intérieur (12) étant inférieure à celle de la section (13) en forme de douille du pot extérieur (11), et la somme des étendues axiales de la section (14) en forme de douille et de la douille (18) du pot intérieur (12) étant supérieure à l'étendue de la section (13) en forme de douille du pot extérieur (11), de sorte que les sections (13, 14) en forme de douille du pot extérieur (11) et du pot intérieur (12) terminent frontalement à fleur, l'une de l'autre, lorsque des pignons planétaires (4) sont agencés entre les disques tubulaires (15 et 16), et
- des évidements (33, 34) étant agencés dans la section (13) en forme de douille du pot extérieur (11) et dans la douille (18) du pot intérieur (12) au travers desquels les pignons planétaires (4) s'étendent en direction radiale.

2. Porte-satellites (2) pour engrenages
- ayant un pot extérieur (11) monobloc à configuration étagée dans lequel est inséré un pot intérieur (12) monobloc également à configuration étagée, ledit pot intérieur (12) et ledit pot extérieur (11) comprenant, à chaque fois, un disque annulaire (15, 16), aux délimitations radiales intérieures duquel se raccorde, à chaque fois, une douille (17, 18) qui se raccorde, par un fond (19, 20) s'étendant radialement vers l'intérieur, à un prolongement tubulaire (21, 22), une section (13) en forme de douille qui s'étend axialement à partir de la douille (17) se raccordant à la délimitation radiale extérieure du disque annulaire (15) du pot extérieur (11),
- les diamètres extérieurs du disque (16) de la douille (18) et du prolongement tubulaire (22) du pot intérieur (12) étant adaptés aux diamètres intérieurs de la section (13) en forme de douille, de la douille (17) et du prolongement tubulaire (21) du pot extérieur (11),
- le pot extérieur (11) et le pot intérieur (12) étant configurés et agencés axialement, l'un dans l'autre, de telle façon que le prolongement tubulaire (22) du pot intérieur (12) est situé, au moins partiellement, à l'intérieur du prolongement tubulaire (21) du pot extérieur (11, que la douille (18) du pot intérieur (12) est située, au moins partiellement, à l'intérieur de la douille (17) du pot extérieur (11), et que le disque annulaire (16) est situé à l'intérieur de la section (13) en forme de douille, et
- des évidements (33, 34) étant agencés dans la section (13) en forme de douille du pot extérieur (11) et dans la douille (18) du pot intérieur (12) au travers desquels évidements des pignons planétaires (4) montés entre les disques (15 et 16) s'étendent en direction radiale.

3. Porte-satellites (2) pour engrenages selon l'une des revendications 1 ou 2" **caractérisé en ce que** la section (13) en forme de douille du pot extérieur (11) est munie d'une denture (25) extérieure pour des disques d'embrayage ou de frein.

4. Porte-satellites (2) pour engrenages selon l'une des revendications 1 ou 2, **caractérisé en ce que** le fond (20) du pot intérieur (12) est muni d'une réception (23) annulaire en forme d'auge dans lequel est monté un roulement axial (24).

5. Porte-satellites (2) pour engrenages selon l'une des revendications 1 ou 2, **caractérisé en ce que** le pot extérieur (11) est formé à partir d'une tôle d'acier sans enlèvement de copeaux.

6. Porte-satellites (2) pour engrenages selon l'une des revendications 1 ou 2, **caractérisé en ce que** le pot intérieur (12) est formé à partir d'une tôle d'acier sans enlèvement de copeaux.

7. Porte-satellites (2) pour engrenages selon l'une des revendications 1 ou 2, **caractérisé en ce que** des alésages (30) alignés sont agencés dans les disques annulaires (15, 16) du pot extérieur (11) et du pot intérieur (12) pou recevoir des boulons (32) sur lesquels sont montés des pignons planétaires (4).

8. Porte-satellites (2) pour engrenages selon la revendication 1, **caractérisé en ce que** les sections (13, 14) en forme de douille du pot extérieur (11) et du pot intérieur (12) sont reliées, l'une à l'autre, par adhérisation dans la zone de recouvrement.

9. Porte-satellites (2) pour engrenages selon la revendication 2, **caractérisé en ce que** la section (13) en forme de douille du pot extérieur (11) est reliée par adhérisation au disque annulaire (16) du pot intérieur (12).

10. Porte-satellites (2) pour engrenages selon la revendication 1, **caractérisé en ce que** les sections (13, 14) en forme de douille du pot extérieur (11) et du pot intérieur (12) sont reliées frontalement, l'une à l'autre, par soudage annulaire continu.

11. Porte-satellites (2) pour engrenages selon la revendication 1, **caractérisé en ce que** les sections (13, 14) sont munies frontalement d'un bord rabattu et sont reliées, l'une à l'autre, en direction périphérique dans la région du bord rabattu.

12. Porte-satellites (2) pour engrenages selon la revendication 2, **caractérisé en ce que** le disque annulaire (16) du pot intérieur (12) est relié à la section (13) en forme de douille du pot extérieur (11) par soudage annulaire continu.

13. Porte-satellites (2) pour engrenages selon l'une des revendications 10, 11 ou 12, **caractérisé en ce que** le joint soudé entre le pot extérieur et le pot intérieur est réalisé par un procédé de soudage au laser.

14. Porte-satellites (2) pour engrenages selon la revendication 1, **caractérisé en ce que** la section (13) en forme de douille du pot extérieur (11) et la section (14) en forme de douille du pot intérieur (12) sont munies de moyens d'engagement positif qui sont engagés, l'un dans l'autre.

15. Porte-satellites (2) pour engrenages selon la revendication 14, **caractérisé en ce que** les moyens d'engagement positif sont formés par une denture intérieure (26) dans la section (13) en forme de douille du pot extérieur (11) et par une première denture (27) dans la section (14) en forme de douille du pot intérieur (12).

16. Porte-satellites (2) pour engrenages selon la revendication 2, **caractérisé en ce que** la section (13) en forme de douille du pot extérieur (11) et le disque annulaire (16) du pot intérieur (12) sont munis de moyens d'engagement positif qui sont engagés, l'un dans l'autre.

17. Porte-satellites (2) pour engrenages selon la revendication 16, **caractérisé en ce que** les moyens d'engagement positif sont formés par une denture intérieure (26) dans la section (13) en forme de douille du pot extérieur (11) et par une seconde denture (28) sur le disque annulaire (16) du pot intérieur (12).

18. Porte-satellites (2) pour engrenages selon l'une des revendications 1 ou 2, **caractérisé en ce que** le pot extérieur (11) et le pot intérieur (12) sont fabriqués d'un acier de cémentation, et un anneau intérieur d'un palier à roulement ou d'une roue libre en forme d'une douille repliée (31) durcie s'engage par dessus la douille (17) du pot extérieur (11) et relie les deux pièces, l'une à l'autre, par engagement positif et/ou par adhérisation.

19. Porte-satellites (2) pour engrenages selon l'une des revendications 1 ou 2, **caractérisé en ce que** la surface intérieure du prolongement tubulaire (22) du pot intérieur (12) est munie d'une denture à cannelures (35).
